**Europäisches Patentamt**

**European Patent Office**

**Office européen des brevets**

(19)

(11) Publication number: **0 019 629**
A1

# EUROPEAN PATENT APPLICATION

(12)

published in accordance with Art. 158(3) EPC

(21) Application number: 79900379.3

(22) Date of filing: 06.04.79

Data of the international application taken as a basis:

(86) International application number: PCT/JP 79/00090

(87) International publication number: WO 79/00953 (15.11.79 79/23)

(51) Int. Cl.³: **B 62 M 1/04**

(30) Priority: 20.04.78 JP 45950/78

(43) Date of publication of application: 10.12.80 Bulletin 80/25

(84) Designated Contracting States: CH DE FR GB SE

(71) Applicant: **TAKAHASHI, Kenryu, 22-3, Higashitateishi 1-chome Katsushika-ku, Tokyo, 124 (JP)**

(72) Inventor: **TAKAHASHI, Kenryu, 22-3, Higashitateishi 1-chome Katsushika-ku, Tokyo, 124 (JP)**

(74) Representative: **Dixon, Donald Cossar et al, Gee & Co. Chancery House Chancery Lane, London WC2 1QU (GB)**

(54) **TRICYCLE.**

(57) A tricycle is driven by alternatively and repeatedly moving both foot pedals upward and downward by the use of weighing with a rider's body weight. A chain is engaged with a sprocket which is provided at the front end of a rotable shaft journaled on a main frame of a tricycle body. The chain is connected at its opposite ends to the foot pedals, respectively. A bevel gear fixed to the rear end of the rotatable shaft is commonly meshed with gears which are in association with a free wheel mounted on a driving shaft of rear wheels.

1

## Description

Title of the Invention:       TRICYCLE

Technical Field:

This invention relates to tricycles of front one and rear two wheels.

Background Art:

However the tricycle or three-wheeler is generally classified into two types of front one and rear two wheels and front two and rear one wheels, any tricycle is not driven by moving both feet up-and-down with parallel balance but by revolving both feet to step on the pedels.

Disclosure of Invention:

This invention relates to the tricycle which can be stood on with burdening the human weight to the left and right feet alternately to drive the body whence self-running by treading down step plates as sitting on the saddle since reaching constant speed.

The object of this invention is to provide a three-wheeler of front one and rear two wheels with possibility of self-running by both feet moving up-and-down with parallel balance to make use of human weight, whereas the former cycles can be run only by leg force to revolve both feet.

Brief Description of Drawings:

The drawings show embodiments of the tricycle relating to this invention;

FIG. 1 is a side view thereof;

FIG. 2 is a top plan view without a saddle thereof;

FIG. 3 is a cross-section along the lines III-III of FIG. 1;

FIG. 4 is a top plan view of second embodiment corresponding to FIG 2;

FIG. 5 is a top plan view of third embodiment corresponding to FIG. 2;  and

FIG. 6 is a cross-section along the lines VI-VI of FIG. 5.

Best Mode for Carrying Out the Invention:

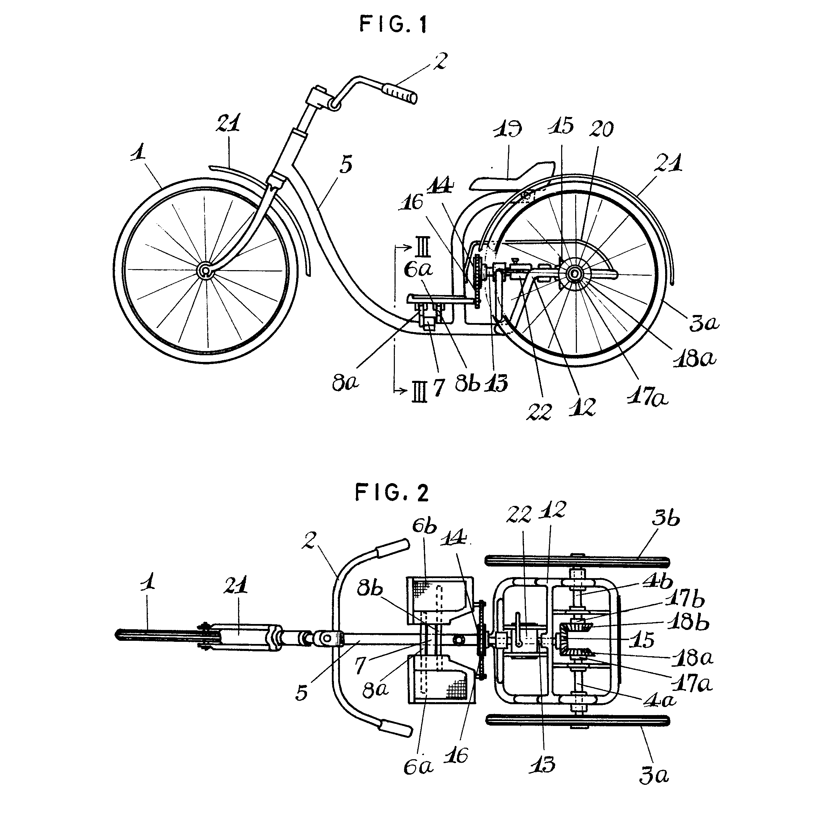

Referring to FIGS 1-3, the tricycle comprises a front wheel 1, direction of which can be changed by a handle 2 and rear wheels 3a, 3b which are relatively fixed to driving shafts 4a, 4b.

Then a body main frame 5 is mounted by a pair of step plates 6a, 6b to be trod by both feet possibly to move up-and-down under horizontal state.

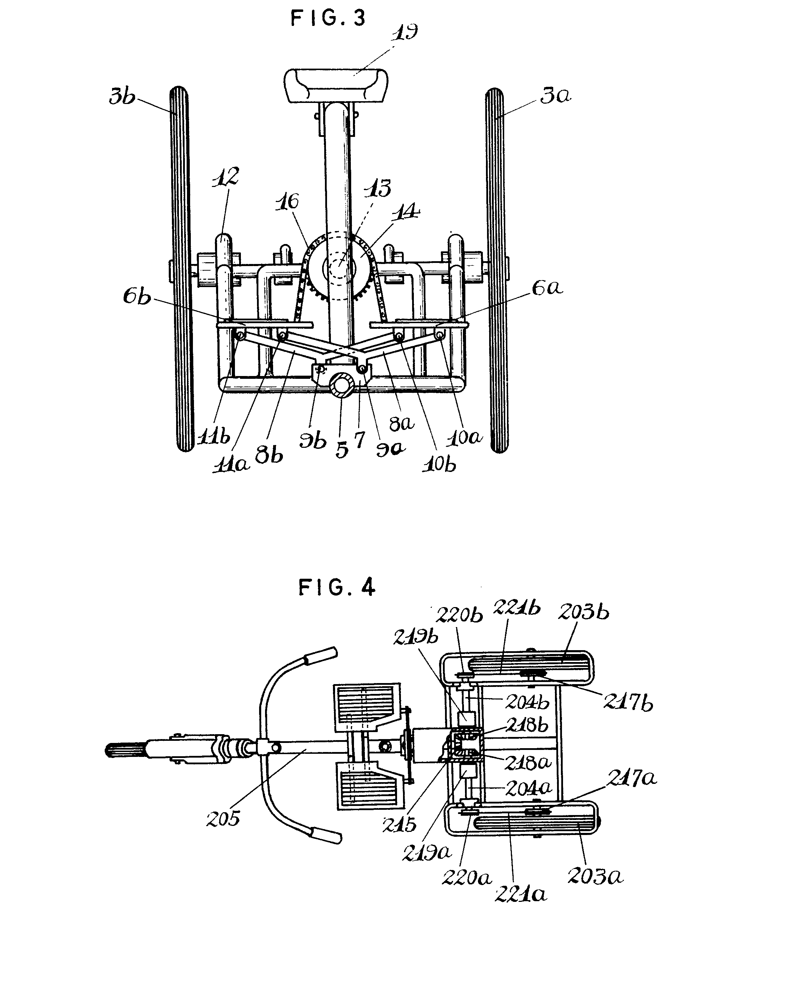

And so a mounting plate 7 is fixed at the body main frame 5 by means of welding etc. as shown in FIG. 3, said plate 7 supporting two Y-form levers 8a, 8b with axes 9a, 9b at crossing positons of front and rear thereof, said levers 8a, 8b having respective rods pivoted by axes 10a, 10b at the rear of the step plate 6a on one side thereof, said levers 8a, 8b having also respective rods pivoted by axes 11a, 11b at the rear of the step plate 6b on the other side thereof.

Accordingly when treading down the step plates 6a, 6b alternately, both step plates 6a, 6b will repeat such motions that one of the step plates goes up whereas the other of them goes down under horizontal state.

The driving shafts 4a, 4b are mounted by a square frame 12 which has a rotary shaft 13 pivoted in parallel with the body main frame 5, said rotary shaft 13 having fixedly a sprocket 14 at front end thereof and a bevel gear 15 at rear end thereof.

The sprocket 14 is stretched over a chain 16 both ends of which are fixed to the step plates 6a, 6b.

The bevel gear 15 is meshed together with bevel gears 18a, 18b having freewheels 17a, 17b which are respectively fixed at the driving shafts 4a, 5b.

There are shown a saddle 19, a driving mechanism cover 20, fender 21 and a speed change gear 22.

This invention is composed as mentioned above and when burdening the human weight alternately to the left and right under standing state to move the step plates 6a, 6b up-and-down alternately, the rotary shaft 13 will rotate half to the left and right alternatively.

Thus the bevel gears 18a, 18b having freewheels 17a, 17b will rotate alternately to the constant direction so that the driving shafts 4a, 4b will rotate to such a direction as to advance the body for running thereof.

Further since putting forth a certain speed, the step plates 6a, 6b will be trod as sitting on the saddle 19 to running. Therefore without reliance on leg force only the human weight can be made use of for self-running and the step plates will move up-and-down under horizontal state so as to drive smoothly and lightly.

Next referring to the second embodiment as shown in FIG. 4, a bevel gear 215 is meshed together with bevel gears 218a, 218b which are respectively fixed at both left and right driven shafts 204a, 204b which are pivoted at a bdoy main frame 205.

There stretch over respective chains 221a, 221b between sprockets 220a, 220b and freewheels 217a, 217b, said sprockets 220a, 220b being fixed at the left and right driven shafts 204a, 204b, said freewheels 217a, 217b being set to left and right wheels 203a, 203b.

However the embodiment shown in the drawinf has the both freewheels set to the left and right rear wheels 203a, 203b, these both freewheels may also be set to the driven shafts 204a, 204b.

Further the driven shafts 204a, 204b have clutches 219a, 219b to make the said shafts idling when the body goes back.

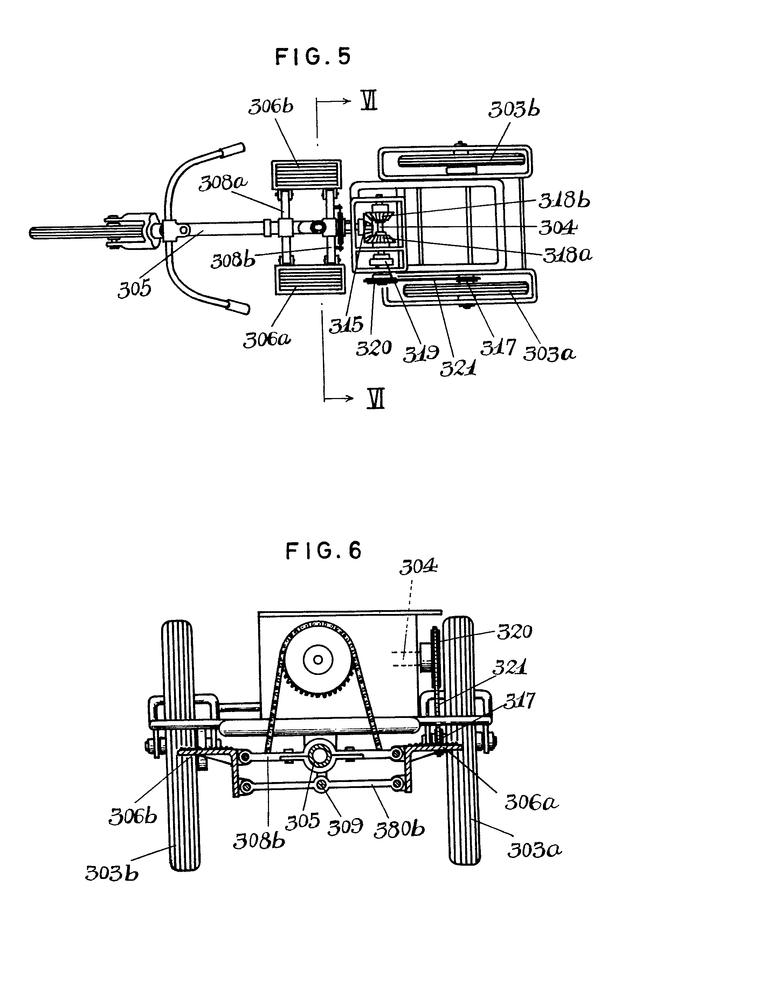

Moreover referring to the third embodiment as shown in FIGS. 5-6, a body main frame 305 has two joggling levers 308a, 308b pivoted and spaced at a prescribed interval as well as an axis 309 has two parallel levers 380a, 380b pivoted and spaced, said axis 309 being mounted under the body main frame 305, said levers 380a, 380b being in length same with the levers 308a, 308b.

Respective projection rods of the levers 308a, 308b and 380b are pivoted at a vertical part of the step plate 306a as well as the other respective projection rods of the levers 308a, 308b and 380a, 380b are pivoted at a vertical part of a step plate 306b.

A bevel gear 315 is meshed oppositely together with two bevel freewheel gears 318a, 318b which are fixed at a rotary cross shaft 304 which is pivoted at the body main frame 305.

Further the rotary cross shaft 304 has a clutch 319 fixing a sprocket 320 thereat, said sprocket 320 having a chain 321 stretched thereon to connect with a freewheel 317 which is mounted on a rear wheel 303b.

Industrial Applicability:

The tricycle of this invention can be used as sport or play vehicle as well as cart or waggon to make use of human weight without reliance on leg force only.

Claims:

1. A tricycle of front one and rear two wheels comprising a pair of step plates between said front wheel and rear both wheels, said step plates possibly moving up-and-down with parallel balance to be mounted on a body main frame which has a rotary shaft pivoted thereon, said rotary sa shaft having a sprocket fixed at front thereof, said sprocket having a chain stretched over thereon, said chain having both ends respectively fixed at both step plates, said rotary shaft having a bevel gear fixed at rear thereof, said bevel gear being meshed together with gears which connect with freewheel being mounted on driving shaft of said rear wheel so as to move both step plates up-and-down alternately with parallel balance to rotate said rear wheel to an advance direction.

2. The tricycle, as set forth in claim 1, wherein said body main frame which has said rotary shaft pivoted thereon, said rotary shaft having said bevel gear fixed at rear thereof, said bevel gear being meshed together with said gears which connect through a chain mechanism with said freewheel being mounted on said driving shaft of said rear wheel.

Claims:

1.(amended) A tricycle characterizing a body main frame 305 to have two joggling levers 308a, 308b pivoted and spaced at a prescribed interval as well as an axis 309 has two parallel levers 380a, 380b pivoted and spaced, said levers 380a, 380b being in length same with the levers 308a, 308b, respective projection rods of said levers 308a, 308b and 380a, 380b being pivoted at a vertical part of a step plate 306a as well as the other respective projection rods of the levers 308a, 308b and 380a, 380b are pivoted at a vertical part of a step plate 306b, a bevel gear 315 being meshed oppositely together with two bevel freewheel gears 318a, 318b which are fixed at a rotary cross shaft 304 which is pivoted at the body main frame 305.

2.(cancelled) The tricycle, as set forth in claim 1, wherein said body main frame which has said rotary shaft pivoted thereon, said rotary shaft having said bevel gear fixed at rear thereof, said bevel gear being meshed together with said gears which connect through a chain mechanism with said freewheel being mounted on said driving shaft of said rear wheel.

STATEMENT UNDER ARTICLE 19 PCT

The Claims are amended under the provisions of Article 19 PCT in order to avoid relevancy to the following cited references which are listed in the international search report.

JP.A.51-60341     26.05.76
JP.U.50-90356     30.07.75
JP.U.50-111844    11.09.75

Furthermore the annexed replacement sheets are made amendment as mentioned above.

FIG. 1

FIG. 2

0019629

1/3

FIG. 3

FIG. 4

FIG.5

FIG.6

0019629

INTERNATIONAL SEARCH REPORT

International Application No PCT/JP79/00090

**I. CLASSIFICATION OF SUBJECT MATTER (if several classification symbols apply, indicate all) [3]**

According to International Patent Classification (IPC) or to both National Classification and IPC

B62M1/04

**II. FIELDS SEARCHED**

Minimum Documentation Searched [4]

| Classification System | Classification Symbols |
|---|---|
| IPC | B62M1/04, B62M17/00 |

Documentation Searched other than Minimum Documentation
to the Extent that such Documents are Included in the Fields Searched [5]

Jitsuyo Shinan Koho 1910-1978
Kokai Jitsuyo Shinan Koho 1971-1978

**III. DOCUMENTS CONSIDERED TO BE RELEVANT [14]**

| Category* | Citation of Document, [16] with indication, where appropriate, of the relevant passages [17] | Relevant to Claim No. [18] |
|---|---|---|
| X | JP, A, 51-60341  26. 05. 76  Takahashi Kenryu | 1 |
| X | JP, U, 50-90356  30. 07. 75  Katano Haruyuki | 1 |
| X | JP, U, 50-111844  11. 09. 75  Hayashi Tokio | 1,2 |

* Special categories of cited documents: [15]
"A" document defining the general state of the art
"E" earlier document but published on or after the International filing date
"L" document cited for special reason other than those referred to in the other categories
"O" document referring to an oral disclosure, use, exhibition or other means

"P" document published prior to the International filing date but on or after the priority date claimed
"T" later document published on or after the International filing date or priority date and not in conflict with the application, but cited to understand the principle or theory underlying the invention
"X" document of particular relevance

**IV. CERTIFICATION**

| Date of the Actual Completion of the International Search [2] | Date of Mailing of this International Search Report [2] |
|---|---|
| June 26, 1979 (26.06.79) | July 9, 1979 (09.07.79) |
| International Searching Authority [1] | Signature of Authorized Officer [20] |
| Japanese Patent Office | |

Form PCT/ISA/210 (second sheet) (October 1977)

BAD ORIGINAL